# EUROPEAN PATENT APPLICATION

(11) **EP 1 925 396 A1**
(43) Date of publication of application: **28.05.2008**
(21) Application number: 06796785.1
(22) Date of filing: 25.08.2006
(51) Int. Cl.: B23Q 17/00, B23B 31/00, G01L 5/00

(54) **TOOL GRASPING FORCE MEASURING SYSTEM AND TOOL GRASPING FORCE MEASURING METHOD**

(30) Priority: 26.08.2005 JP 2005245111
(71) Applicant: TOYOTA JIDOSHA KABUSHIKI KAISHA, Toyota-shi Aichi 471-8571 (JP); Unipulse Co., Ltd., Chuo-ku Tokyo 1040061 (JP)
(72) Inventor: OOSHIMA, Hideto, Toyota-shi, Aichi 4718571 (JP); NOJIRI, Jun, Toyota-shi, Aichi 18571 (JP); ISHIHARA, Takayuki, Toyota-shi, Aichi 4718571 (JP); HOSHI, Takeo, Koshigaya-shi, Saitama 3430041 (JP); KOBAYASHI, Atsushi, Koshigaya-shi, Saitama 3430041 (JP)
(74) Representative: Smith, Samuel Leonard
(86) International application number: PCT/JP2006/316712
(87) International publication number: WO 2007/023938

(57) **Abstract**

A tool holding force measuring system 1 comprises a main shaft held part 21 having substantially the same shape as a held part 402 of a tool 400, a slide member 28 displaced by taking the main shaft held part 21 in a clamping mechanism 304, a load cell 23 detecting the displacement amount of the slide member 28 so as to calculate the holding force of the clamping mechanism 304 based on the displacement amount, and a radio transmitter 24 outputting the holding force of the clamping mechanism 304 calculated by the load cell 23 by transmitting it on radio. Accordingly, one operator can measure the holding force.

## Description

### Technical Field

The present invention relates to an art measuring force of a tool holding means holding a tool, wherein the tool holding means is attached to a main shaft rotatably driven by a drive source in a processing equipment such as a machining centre.
In more detail, the present invention relates to laborsaving of measurement of tool holding force of the tool holding means.

### Background Art

With regard to a processing equipment such as a machining centre, normally, basal parts of several types of tools are formed in a certain shape and each basal part works as a held part, and a tool holding means is provided in a main shaft rotatably driven by a drive source so as to hold the held part of the tool. The tool held by the tool holding means can be exchanged so that various kinds of processing such as cutting and grinding can be performed by one processing equipment.

The processing equipment mostly has a device called an automatic tool changer (hereinafter, referred to as ATC). Generally, the ATC comprises a tool housing means housing a plurality of the tools respectively at predetermined positions and a tool conveying means conveying the tools between the tool housing means and the tool holding means so as to perform laborsaving of exchange of the tool held by the tool holding means.

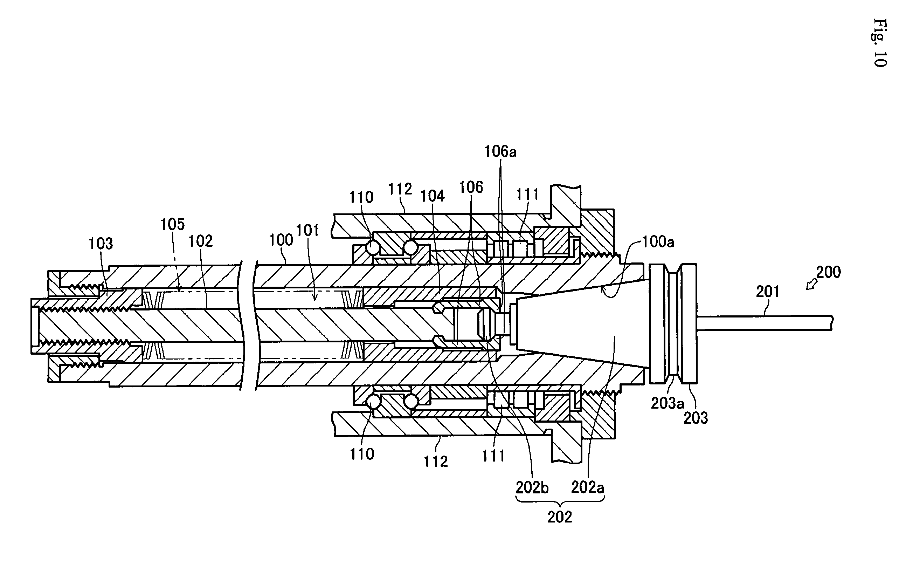

Explanation will be given on a clumping mechanism 101, which is one of the examples of the tool holding means, provided in a main shaft 100 of a general processing equipment and a tool 200 fixed to the main shaft 100 by the clumping mechanism 101 referring to Fig. 10.

The main shaft 100 is substantially cylindrical, is pivoted by a structure 112 of the processing equipment through bearings 110 and 111, and is rotatably driven by a drive source (not shown). A tapered surface 100a is formed at an opening of an end of an inner surface of the main shaft 100.

The clamping mechanism 101 mainly comprises a rod 102, a basal spring bracket 103, a tip spring bracket 104, a conical spring 105, holding claws 106 and the like, and is arranged in the inner space of the main shaft 100.

The rod 102 is formed in a stick-like shape, and the basal spring bracket 103 is screwed into the basal part of the rod 102. A groove, in which the basal parts of the holding claws 106 are engaged rotatably, is formed in the tip of the rod 102.

The basal spring bracket 103 slidably touches the inner peripheral surface of the main shaft 100. The tip spring bracket 104 is substantially cylindrical and is engaged in the middle portion of the inner peripheral surface of the main shaft 100. The basal side of the inner peripheral surface of the tip spring bracket 104 has small inner diameter and slidably touches the rod 102. The tip side of the inner peripheral surface thereof has large inner diameter.

The conical spring 105 is externally engaged on the rod 102, and touches the basal spring bracket 103 and the tip spring bracket 104 so as to bias the rod 102 toward the tip of the main shaft 100.

The basal parts of the holding claws 106 are engaged rotatably with the tip of the rod 102. Projections 106a are formed at the tips of the holding claws 106.
The tool 200 mainly comprises a tool part 201, a held part 202, a support part 203 for conveying and the like.

The tool part 201 actually touches an object and performs processing (cutting or the like) the object. The tool part 201 is generally constructed so that a tip of ceramic or industrial diamond is connected to an end of a metal shank, which is a body of the tool part 201. The held part 202 comprises a tapered shank 202a and a pull stud 202b. The tapered shank 202a is substantially a circular truncated cone, and the shape of the outer peripheral surface thereof corresponds to the tapered surface 100a. The tip of the pull stud 202b is more expanded than the basal part thereof (the part attached to the tapered shank 202a).

The support part 203 for conveying is held when a conveying device (not shown) of the processing equipment conveys the tool 200, and a groove 203a is formed in the outer peripheral surface of the support part for conveying 203. The conveying device (not shown) engages with the groove 203a so as to convey the tool 200 without dropping it.

When an actuator (not shown) pushes the rod 102 toward the tip of the main shaft 100, the rod 102 is projected toward the tip of the main shaft 100 oppositely to the biasing force of the conical spring 105. As a result, the tips of the holding claws 106 are projected more than the tip spring bracket 104 and opened.

While the tips of the holding claws 106 are opened, when the held part 202 of the tool 200 is engaged with the tip of the main shaft 100 and then the actuator (not shown) stops pushing of the rod 102 toward the tip of the main shaft 100, the rod 102 is slid toward the basal part of the main shaft 100 by the biasing force of the conical spring 105. As a result, the tips of the holding claws 106 are taken into the tip spring bracket 104 and touch the inner peripheral surface of the tip spring bracket 104, and then the holding claws 106 are closed. At this time, the projections 106a formed at the tips of the holding claws 106 are engaged with the pull stud 202b and hold it so that the tool 200 is taken in toward the basal part of the main shaft 100 and fixed while the tapered shank 202a touches the tapered surface 100a.

Generally, for improving the processing accuracy of the processing equipment, it is necessary that the central axis of the main shaft 100 is in agreement accurately with the central axis of the tool 200 held on the main shaft 100.
It is also necessary that the tool 200 is fixed to the main shaft 100 steady, that is, the holding force of the clamping mechanism 101 holding the tool 200 is large.

However, the holding force of the clamping mechanism 101 provided in the main shaft 100 in this embodiment depends on the biasing force of the conical spring 105 so that the conical spring 105 is degraded (the biasing force thereof is decreased) by using for a long term, whereby the desired biasing force may not be obtained. In this case, dimensional accuracy of an object processed by the processing equipment may be reduced. In the worst case, when processing, the tool 200 may fall from the main shaft 100 and damage the processing equipment or an object.

As a method solving the above-mentioned problems, there is a method that holding force of a tool holding means provided in a main shaft of a processing equipment is measured regularly by a holding force measuring means, and when the holding force is lower than desired value, the processing equipment is maintained (for example, a spring generating the holding force is exchanged). There is known a holding force measuring device used for such holding force measurement. For example, arts described in a patent literature 1 (the Japanese Utility Model Laid Open Gazette Hei. 6-45238) and a patent literature 2 (the Japanese Utility Model Sho. 63-7443) are given.

A holding force measuring device described in the patent literature 1 comprises a main shaft held part having the same shape as a part of a tool held by a tool holding means provided in a main shaft of a processing equipment, a load cell detecting force of the tool holding means holding the main shaft held part, and a display part displaying the holding force detected by the load cell, wherein the main shaft held part, the load cell and the display part are constructed integrally.

A holding force measuring device described in the patent literature 2 comprises a measuring device, comprising comprises a main shaft held part having the same shape as a part of a tool held by a tool holding means provided in a main shaft of a processing equipment and a load cell detecting force of the tool holding means holding the main shaft held part, and a display device connected through a cable to the measuring device and obtaining the holding force detected by the measuring device through the cable and displaying it.

However, with regard to the holding force measuring device described in the patent literature 1, the display part is constructed integrally with the holding force measuring device so that at least one operator must be in the vicinity of the holding force measuring device, that is, in a work space of the holding force measuring device at the time of measuring the holding force.
Accordingly, for securing safety of holding force measuring work, it is necessary that an operator, operating the processing equipment outside the processing equipment and treating the holding force measuring device in the work space, must perform the work carefully while confirming the processes of the work, whereby the work is troublesome and the time required for the work is different to be shortened.
It may be constructed that an electric circuit for the holding force measuring work, preventing various actuation parts of the processing equipment (such as a main shaft and a table of a work piece) from performing any action except the holding of the tool (the holding force measuring means), is provided parallel to a normal electric circuit of the processing equipment, and the electric circuit for the holding force measuring work is used at the time of the holding force measuring work. However, cost is required for providing the electric circuit for the holding force measuring work. Furthermore, even if the electric circuit is provided, at least two operators are required for operating the processing equipment outside the processing equipment and treating the holding force measuring device in the work space.
"The work space" means a space in which the processing equipment fixes, moves and processes an object.

With regard to the holding force measuring device described in the patent literature 2, the measuring device held by the processing equipment is separated from the display device displaying the measured holding force so that the display device can be arranged near an operation means provided outside the processing equipment. Accordingly, one operator can measure the holding force at a position away from the work space of the processing equipment. However, coolant (cutting fluid) used in the processing equipment may enter through a connecting part (connector) between a cable and the measuring device held by the tool holding means provided in the main shaft of the processing equipment of the cable so as to break the processing equipment. Furthermore, at the time of holding the measuring device by the tool holding means provided in the main shaft and releasing the holding, an operator must support the measuring device by hands so as to prevent the measuring device from falling from the main shaft, whereby two or more operators are required finally.

### Disclosure of Invention

### Problems to Be Solved by the Invention

Considering the above-mentioned problems, the present invention provides a holding force measuring system and a holding force measuring method which enable measurement of holding force by one operator, eventually makes the measurement work of holding force to be labor-saving and shortens time required for the work.

### Means for Solving the Problems

The above-mentioned problems are solved by the following means.

With regard to a tool holding force measuring system measuring holding force of a tool holding means of a processing equipment, wherein the processing equipment comprising:
a tool housing means housing therein a plurality of tools each of which having a held part of substantial same shape;
the tool holding means provided in a main shaft rotatably driven by a drive source and taking in the tool along the axis of the main shaft while holding the held part of the tool so as to hold the tool; and
a tool conveying means extracting selectively one of the tools housed in the tool housing means, conveying the extracted tool to a position at which the held part of the tool can be held by the tool holding means, receiving the tool held by the tool holding means, and conveying the tool to the tool housing means,
the tool holding force measuring system comprises:
   a main shaft held part having substantially same shape as the held part of the tool;
   a displacement part displaced by taking the main shaft held part in the tool holding means;
   a holding force calculation part detecting the displacement amount of the displacement part so as to calculate holding force of the tool holding means based on the displacement amount; and
   an output part outputting the holding force calculated by the holding force calculation part.

The tool holding force measuring system according to the present invention further comprises:
a measuring device having the main shaft held part, the displacement part, the holding force calculation part and the output part; and
a display device independent from the measuring device and receives the holding force transmitted from the output part.

With regard to a tool holding force measuring method according to the present invention measuring holding force of a tool holding means of a processing equipment by a tool holding force measuring system, wherein the processing equipment comprising:
a tool housing means housing therein a plurality of tools each of which having a held part of substantial same shape;
the tool holding means provided in a main shaft rotatably driven by a drive source and taking in the tool along the axis of the main shaft while holding the held part of the tool so as to hold the tool; and
a tool conveying means extracting selectively one of the tools housed in the tool housing means, conveying the extracted tool to a position at which the held part of the tool can be held by the tool holding means, receiving the tool held by the tool holding means, and conveying the tool to the tool housing means,
wherein the tool holding force measuring system comprising:
a main shaft held part having substantially same shape as the held part of the tool;
a displacement part displaced by taking the main shaft held part in the tool holding means;
a holding force calculation part detecting the displacement amount of the displacement part so as to calculate holding force of the tool holding means based on the displacement amount; and
an output part outputting the holding force calculated by the holding force calculation part,
the tool holding force measuring method is characterized in that the tool holding force measuring method comprises:
   a conveying step that the tool conveying means extracts selectively one of the tools housed previously in the tool housing means and conveys the extracted tool to a position at which the held part of the tool can be held by the tool holding means;
   a holding step that the tool holding means holds the main shaft held part of the tool holding force measuring system and then the tool conveying means releases the support of the tool holding force measuring system;
   a holding force measuring step that the tool holding force measuring system calculates and outputs holding force of the tool holding means at a time of holding the main shaft held part;
   a releasing step that the tool conveying means supports the tool holding force measuring system held by the tool holding means and then the tool holding means releases holding of the main shaft held part of the tool holding force measuring system; and
   a housing step that that the tool conveying means conveys the tool holding force measuring system and houses it in the tool housing means.

With regard to the tool holding force measuring method according to the present invention, a series of the holding step, the holding force measuring step and the releasing step is repeated several times.

With regard to the tool holding force measuring method according to the present invention, the tool holding force measuring system comprises:
a measuring device having the main shaft held part, the displacement part, the holding force calculation part and the output part; and
a display device independent from the measuring device and receives the holding force transmitted from the output part.

### Effect of the Invention

The present invention constructed as the above brings the following effects.

according to the holding force measuring system and the holding force measuring method of the present invention, one operator can measure the holding force of the tool holding means.
An operator outside the processing equipment can know the measured result of the holding force of the tool holding means.
One operator can measure the holding force of the tool holding means.
Reliability of the measured result of the holding force of the tool holding means is improved.
An operator outside the processing equipment can know the measured result of the holding force of the tool holding means.

### Brief Description of Drawings

[Fig. 1] Fig. 1 is a schematic drawing of a processing equipment according to the present invention.
[Fig. 2] Fig. 2 is a schematic drawing of an ATC of the processing equipment according to the present invention.
[Fig. 3] Fig. 3 is a sectional side view of a main shaft of the processing equipment according to the present invention.
[Fig. 4] Fig. 4 is a side view of a tool according to the present invention.
[Fig. 5] Fig. 5 is an entire perspective view of a tool holding force measuring system according to the present invention.
[Fig. 6] Fig. 6 is a side view of a holding force measuring device according to the present invention.
[Fig. 7] Fig. 7 is a block diagram of a display device according to the present invention.
[Fig. 8] Fig. 8 is a side view of another embodiment of a holding force measuring device according to the present invention.
[Fig. 9] Fig. 9 is a flow chart of a tool holding force measuring method according to the present invention.
[Fig. 10] Fig. 10 is a sectional side view of a main shaft of a conventional processing equipment.

### Description of Notations

- 1: a tool holding force measuring system
- 2: a measuring device
- 3: a display device
- 21: a main shaft held part
- 22: a conveying support part
- 23: a load cell (holding force calculating means)
- 24: a radio transmitter (output part)
- 25: a battery
- 27: a casing
- 300: a processing equipment
- 301: a motor (drive source)
- 303: a main shaft
- 304: a clamping mechanism (tool holding means)

### The Best Mode for Carrying out the Invention

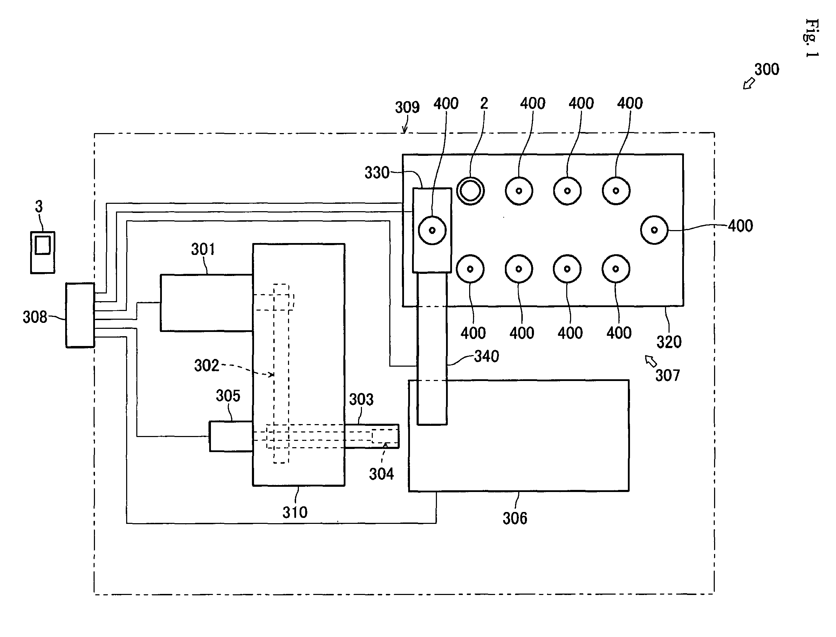

Explanation will be given on a processing equipment 300 which is an embodiment of a processing equipment according to the present invention referring to Fig. 1.
The processing equipment 300 is an equipment processing an object.
"Processing" in the application includes cutting, grinding, polishing, boring, drilling and the like.
"A processing equipment" in the application includes widely a machining centre, a milling machine, an engine lathe, a drilling machine and the like.
"An object" in the application includes generally inorganic material such as metal material, semiconductor material and ceramic, organic material such as resin, carbon graphite, and the like.

The processing equipment 300 comprises a plurality of tools 400 and uses them properly corresponding to purposes so as to perform various processing (cutting, grinding, polishing, boring, drilling and the like).

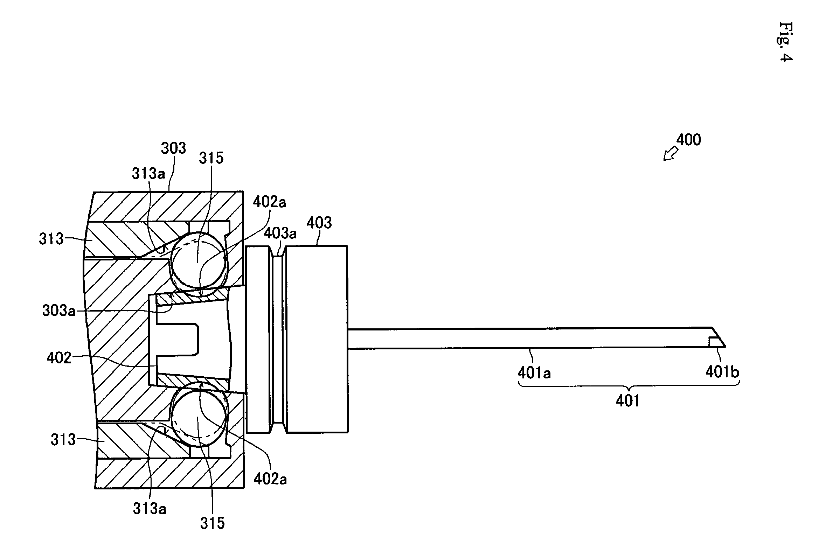

As shown in Fig. 4, each of the tools 400 used in the processing equipment 300 mainly comprises a tool part 401, a held part 402, a support part for conveying 403 and the like.

The tool part 401 actually touches an object and performs processing (cutting or the like) of the object.
In the case that the tool 400 is a cutting tool, the tool part 401 is generally constructed so that a tip 401b of ceramic or industrial diamond is connected to an end of a metal shank 401 a which is a body of the tool part 401. The shape and construction of each of the tool parts 401 of the tools 400 of the processing equipment 300 is different to each other corresponding to the purpose (cutting, grinding, polishing, boring, drilling and the like).

The held part 402 is a part of the tool 400 held by a later-discussed clamping mechanism 304.
The outline of the held part 402 is substantially a circular truncated cone, and the outer peripheral surface thereof touches a tapered surface 303a of a main shaft 303. The outer peripheral surface of the held part 402 is provided therein with engagement holes 402a.

The support part for conveying 403 is a part of the tool 400 supported by a rotary arm 340 of an ATC 307 and is substantially a cylinder whose outer peripheral surface is provided therein with a groove 403 a.
As shown in Fig. 1, the processing equipment 300 mainly comprises a motor 301, a drive transmission mechanism 302, the main shaft 303, the clamping mechanism 304, a clamping mechanism actuating cylinder 305, a table 306, the ATC 307, an operating panel 308, an outer wall 309 and the like.

The motor 301 is an embodiment of a drive source according to the present invention and rotates the main shaft 303. The motor 301 in this embodiment is an electric motor. However, the drive source according to the present invention is not limited thereto, and another construction which drives rotatably the main shaft may be adopted.

The drive transmission mechanism 302 transmits driving force generated by the motor 301 to the main shaft 303, and concretely comprises gears, rotary shafts and the like.

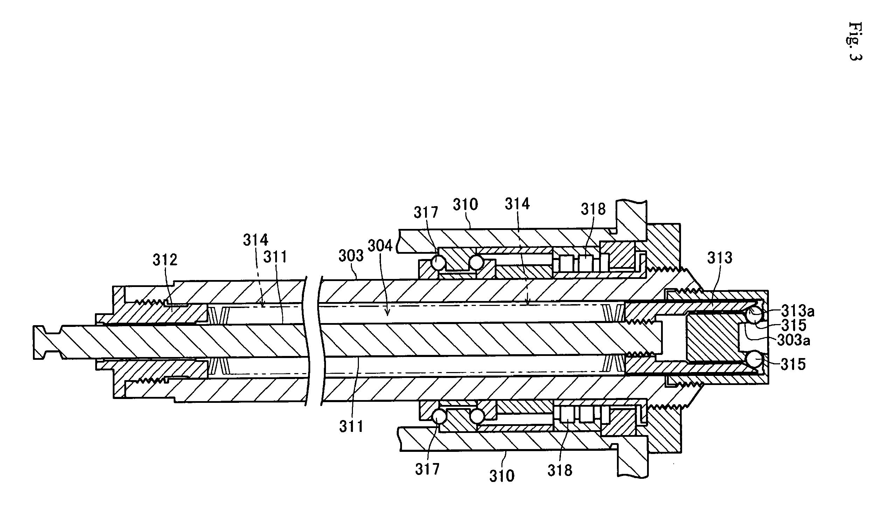

As shown in Figs. 1 and 3, the main shaft 303 is an embodiment of a main shaft according to the present invention. The main shaft 303 is substantially cylindrical and is rotatably pivoted on a structure 310 through bearings 317 and 318 and rotatably driven by the motor 301. A recess having the tapered surface 303a is formed at the end of the main shaft 303.

As shown in Figs. 1 and 3, the clamping mechanism 304 is an embodiment of a tool holding means according to the present invention and holds the tool 400 on the main shaft 303.
"Holding the tool on the main shaft" in the application means fixing the tool detachably on the main shaft (more strictly, fixing the tool detachably and relatively unrotatably on the main shaft).

The clamping mechanism 304 mainly comprises a rod 311, a basal spring bracket 312, a tip spring bracket 313, a conical spring 314, balls 315 and the like, and is arranged in the inner space of the main shaft 303.

The rod 311 is a stick-like member. The basal part of the rod 311 slidably penetrates the basal spring bracket 312, and the tip thereof is screwed into the tip spring bracket 313. The basal spring bracket 312 is screwed into the basal part of the main shaft 303. The tip spring bracket 313 slidably touches the inner peripheral surface of the inner space of the main shaft 303.

The conical spring 314 is externally engaged on the rod 311, and touches the basal spring bracket 312 and the tip spring bracket 313 so as to bias the rod 311 toward the tip of the main shaft 303.

The balls 315 are spherical members arranged in a passage communicating the tapered surface 303a with the main shaft 303, and touch a tapered surface 313a of the tip spring bracket 313.

The clamping mechanism actuating cylinder 305 actuates the clamping mechanism 304, that is, switches the clamping mechanism 304 between the state that the tool 400 can be held on the main shaft 303 and the state that the tool 400 can be detached from the main shaft 303.
The clamping mechanism actuating cylinder 305 is a single-acting hydraulic cylinder whose cylinder rod is moved to be contracted by oil pressure and is moved to be extended by relief of oil. The tip of the cylinder rod of the clamping mechanism actuating cylinder 305 is relatively rotatably engaged through an engagement member (not shown) in a groove provided in the basal portion of the rod 311.

As shown by a two-dot chain line in Fig. 4, when the clamping mechanism actuating cylinder 305 is extended (pressure oil is relieved), the rod 311 is moved toward the tip of the main shaft 303 by the biasing force of the conical spring 314.

Thereupon, the balls 315 touch the tapered surface 313a of the tip spring bracket 313 and are pushed, and a part of the balls 315 is projected from the tapered surface 303a of the main shaft 303. Then, the balls 315 are engaged with the engagement holes 402a provided in the outer peripheral surface of the held part 402 of the tool 400. Therefore, the held part 402 of the tool 400 is taken in the main shaft 303 and held so that the tool 400 is held at the tip of the main shaft 303.

As shown by a solid line in Fig. 4, when the clamping mechanism actuating cylinder 305 is contracted, the rod 311 is moved integrally with the tip spring bracket 313 toward the basal part of the main shaft 303 against the biasing force of the conical spring 314.

As a result, the balls 315 can move along the radius of the main shaft 303. Accordingly, the engagement between the balls 315 and the engagement holes 402a can be released so as to detach the tool 400 from the main shaft 303.
The clamping mechanism 304 provided in the main shaft 303 in this embodiment is constructed so that the tool 400 is held by the balls 315. However, the tool holding means according to the present invention is not limited thereto and another construction that the tool can be held on the main shaft may be adopted. As an example of another construction, the conventional clamping mechanism 101 shown in Fig. 10 that the tool is held by the holding claws 106 may be given.

An object to be processed by the processing equipment 300 is fixed on the table 306 and moved relatively to the tool 400 held on the main shaft 303.

The ATC (automatic tool changer) 307 exchanges the tool 400 held on the main shaft 303 by the clamping mechanism 304 and mainly comprises a tool rack 320, a tool extraction mechanism 330, the rotary arm 340 and the like.

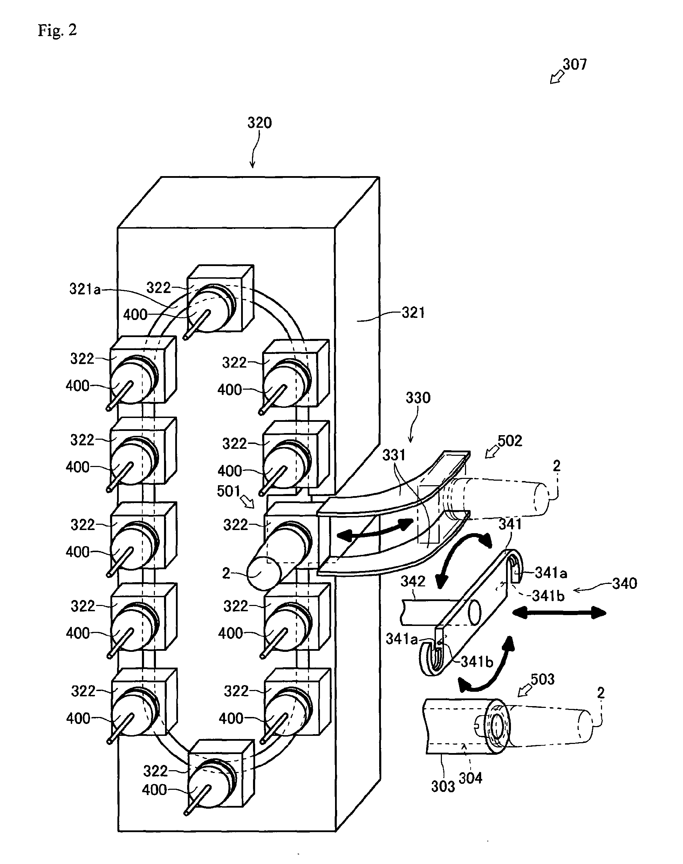

The tool rack 320 is an embodiment of a tool housing means according to the present invention.
As shown in Fig. 2, the tool rack 320 mainly comprises a main body 321, tool holding blocks 322 and the like.

The main body 321 is a main structure of the tool rack 320 and the front surface thereof is provided thereon with an oval rail 321a.

Each of the tool holding blocks 322 comprises a mechanism similar to the clamping mechanism 304 and holding the held part 402 of the tool 400, and is moved along the rail 321a while holding the tool 400 by an actuator (not shown).

Accordingly, the tools 400 are housed in the tool rack 320 while the tools 400 are held by the tool holding blocks 322.

The combination of the tool extraction mechanism 330 and the rotary arm 340 is an embodiment of a tool conveying means according to the present invention. One of the tools 400 housed in the tool rack 320 is selectively extracted, the extracted tool 400 is conveyed to the position at which the held part 402 of the tool 400 can be held by the clamping mechanism 304, and the tool 400 held by the clamping mechanism 304 is received and conveyed to the tool rack 320.

The tool extraction mechanism 330 selectively extracts one of the tools 400 housed in the tool rack 320.

In this embodiment, the tool extraction mechanism 330 comprises an actuator (not shown), which rotates the tool holding block 322 arranged at a predetermined position on the rail 321a of the tool rack 320 (extraction position) to the side of the main body 321, and guides 331 guiding the tool holding block 322 rotated by the actuator to a delivery position to the rotary arm 340.

The desired tool 400 held by the tool holding block 322 is moved to an extraction position 501 along the rail 321 a of the tool rack 320 and then moved to a delivery position 502 to the rotary arm 340 by the tool extraction mechanism 330 so as to extract selectively one of the tools 400 housed in the tool rack 320.

The rotary arm 340 receives the tool 400 extracted by the tool extraction mechanism 330 and conveys it to the clamping mechanism 304 while supporting it at the predetermined posture, and receives the tools 400 held by the clamping mechanism 304 and conveys it to the tool rack 320 while supporting it at the predetermined posture.
"Supporting the tool at the predetermined posture" in the application means fixing the tool to the tool conveying means while preventing it from falling out from the tool conveying means and keeping it at the predetermined posture.

The rotary arm 340 mainly comprises an arm member 341, a slide rotary shaft 342 and the like.
The arm member 341 is a long and narrow plate member and the ends thereof are provided therein with notches 341a. Each of the notches 341a is engaged with a part of the groove 403a provided in the support part for conveying 403. The notches 341a of the arm member 341 is provided therein with projections 341b which can be projected from and taken into openings of the end surfaces of the arm member 341.

When the projection 341b is projected while the notch 341a is engaged with the part of the groove 403a provided in the support part for conveying 403 of the tool 400, the opening of the end surface of the notch 341 a becomes small so that the tool 400 is prevented from falling out from the arm member 341. When the projection 341b is projected, the tool 400 is fixed to the penetralia of the notch 341a of the arm member 341 so that the tool 400 is kept at the predetermined posture against the arm member 341.

One of the ends of the slide rotary shaft 342 is fixed to the substantial center of the arm member 341, and the slide rotary shaft 342 is pivoted by a structure (not shown) of the processing equipment 300. The axis of the slide rotary shaft 342 is substantially parallel to the axis of the main shaft 303. The slide rotary shaft 342 is slidable axially and rotatable along the perimeter of the axis against the structure (not shown) pivoting it.
The ATC 307 in this embodiment comprises the tool rack 320, the tool extraction mechanism 330 and the rotary arm 340. However, the construction is not limited thereto and another construction having the function as the tool housing means and the tool conveying means according to the present invention may be adopted.
For example, construction may be adopted comprising a shelf which houses tools and a later-discussed tool holding force measuring device and a robot arm which extracts the optional tool and the later-discussed tool holding force measuring device housed in the shelf. In this case, the shelf serves as the tool housing means and the robot arm serves as the tool conveying means.

The operating panel 308 is connected to the motor 301, the clamping mechanism actuating cylinder 305, the table 306, the ATC 307 (the tool rack 320, the tool extraction mechanism 330 and the rotary arm 340) and the like and operates them.
The operating panel 308 in this embodiment comprises a touch panel and operating buttons for various operations of the processing equipment 300 and information indicating the actual state of the processing equipment 300 are displayed on the touch panel.
The operating panel 308 is constructed to operate manually the processing equipment 300. However, the predetermined operation may be performed automatically by installing a program on a control unit of the operating panel.

The outer wall 309 covers the other members provided in the processing equipment 300 so as to prevent chips of an object generated at the processing and cutting fluid used at the processing from scattering around and to screen noise of the processing.

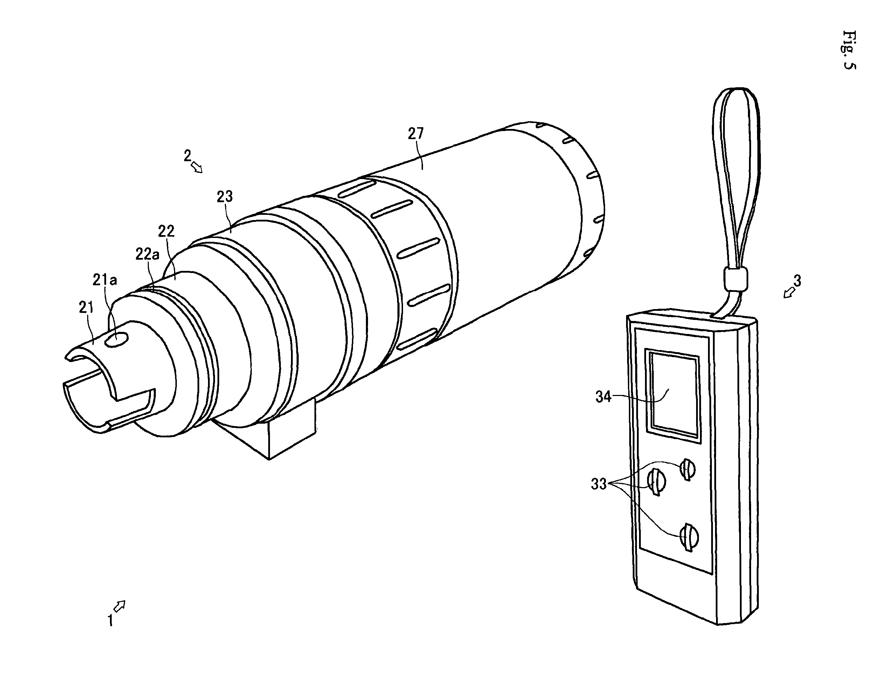

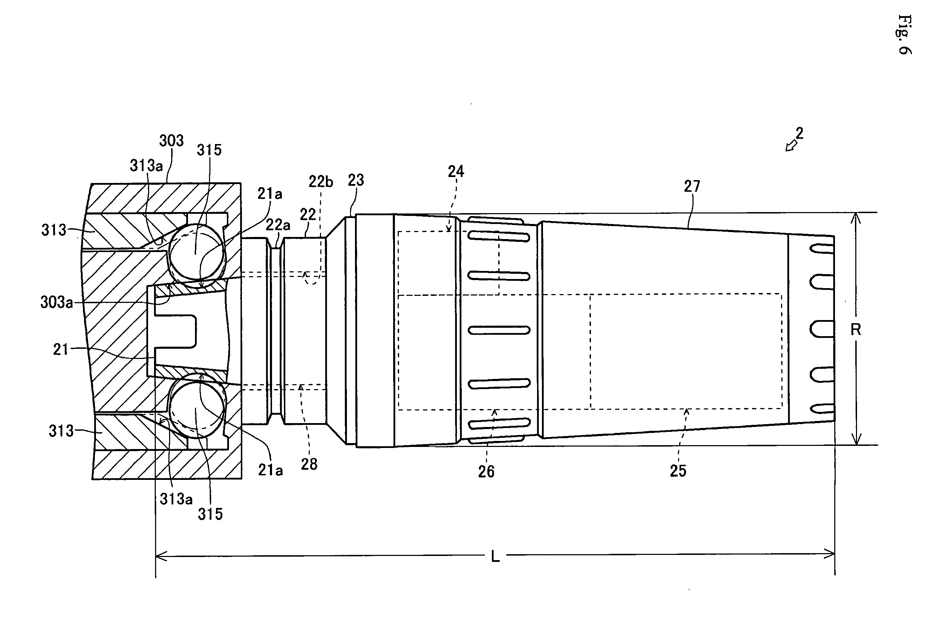

Explanation will be given on a tool holding force measuring system 1 which is an embodiment of a tool holding force measuring system according to the present invention referring to Figs. 5 and 6.

The tool holding force measuring system 1 measures holding force (more strictly, magnitude of holding force) of the clamping mechanism 304 provided in the main shaft 303 of the processing equipment 300.
"The holding force of the tool holding means" in the application means the force of the tool holding means holding on the main shaft.
The tool holding force measuring system 1 mainly comprises a measuring device 2 and a display device 3.

Explanation will be given on the measuring device 2 which is an embodiment of a measuring device according to the present invention referring to Figs. 5 and 6.

The measuring device 2 mainly comprises a main shaft held part 21, a conveying support part 22, a load cell 23, a radio transmitter 24, a battery 25, an electronic circuit 26, a casing 27, a slide member 28 and the like.

The main shaft held part 21 is an embodiment of a main shaft held part of the holding force measuring system according to the present invention.
The main shaft held part 21 is the part of the measuring device 2 held by the clamping mechanism 304 and has substantially the same shape as the part of the tool 400 held by the clamping mechanism 304, that is, the held part 402.
The outline of the main shaft held part 21 is substantially a circular truncated cone, and the outer peripheral surface thereof touches the tapered surface 303a of the main shaft 303. The outer peripheral surface of the main shaft held part 21 is provided therein with engagement holes 21 a.

The conveying support part 22 is the part of the measuring device 2 supported by the rotary arm 340 of the ATC 307 and has substantially the same shape as the part of the tool 400 supported by the rotary arm 340, that is, the support part for conveying 403. The conveying support part 22 is substantially cylindrical and the outer peripheral surface thereof is formed therein with a groove 22a.

The combination of the main shaft held part 21 and the conveying support part 22 of the measuring device 2 has substantially the same shape as the combination of the held part 402 and the support part for conveying 403 of the tool 400. However, the internal structure of the combination of the main shaft held part 21 and the conveying support part 22 of the measuring device 2 is different from the internal structure of the combination of the held part 402 and the support part for conveying 403 of the tool 400.

Though the held part 402 of the tool 400 is fixed to the support part for conveying 403, the main shaft held part 21 of the measuring device 2 is fixed on one of the ends of the slide member 28 slidably penetrating a through hole 22b provided in the conveying support part 22. Accordingly, the main shaft held part 21 can be slid integrally with the slide member 28 along the axis of the main shaft 303 (that is, along the direction that the clamping mechanism 304 takes the tool 400 in).

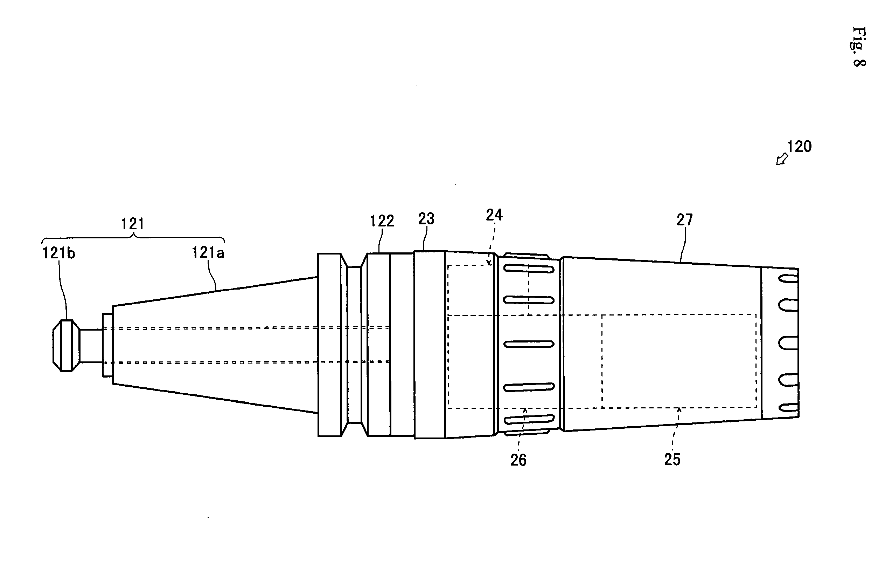

The slide member 28 is an embodiment of a displacement part according to the present invention and is displaced when the clamping mechanism 304 takes the main shaft held part 21 in (in this embodiment, the relative position to the conveying support part 22 is changed).
The construction of the main shaft held part according to the present invention is not limited to the construction of the main shaft held part 21 and is necessary to be changed suitably corresponding to the construction of the main shaft held part of the tool used in the processing equipment.
For example, when the main shaft held part of the tool used in the processing equipment is constructed by combination of a tapered shank and a pull stud, it is necessary to provide the main shaft held part 121, which comprises the tapered shank 121a and the pull stud 121b, and the support part for conveying 122 as the holding force measuring device 120 shown in Fig. 8.
In this case, the inside of the main shaft held part 121 is also necessary to be constructed that the pull stud 121 b is fixed to a slide member penetrating through holes provided in the tapered shank 121a and the support part for conveying 122 so as to be slidable integrally with the slide member along the axis of the main shaft.

The load cell 23 is an embodiment of a holding force calculation means according to the present invention and detects the displacement amount of the slide member 28 so as to calculate the holding force of the clamping mechanism 304 based on the displacement amount. In this embodiment, the other end of the main shaft held part 21 (the end opposite to the end at which the main shaft held part 21 is fixed) is fixed to the load cell 23. Strain amount of a strain gage of the load cell 23 is changed corresponding to the holding force of the clamping mechanism 304 (more strictly, the force of the load cell 23 drawing the main shaft held part 21 in), and voltage applied on the strain gage is also changed. Accordingly, the holding force of the clamping mechanism 304 can be calculated based on the change of voltage of the strain gage of the load cell 23.

The radio transmitter 24 is an embodiment of an output part according to the present invention and outputs the holding force of the clamping mechanism 304 calculated by the load cell 23 by transmitting it on radio.
In addition, the radio transmitter 24 in this embodiment may transmit information about residue of electric power of the later-discussed battery 25.

The battery 25 supplies electric power to the load cell 23 and the radio transmitter 24. The battery 25 in this embodiment is a secondary battery. However, the electric power supply part according to the present invention is not limited thereto, and a dry battery or the like may be used.

The electronic circuit 26 is connected to the load cell 23, the radio transmitter 24 and the battery 25.
The electronic circuit 26 has a function to supply electric power of the battery 25 to the load cell 23 and the radio transmitter 24 while changing voltage suitably thereto respectively, a function to convert the information about the holding force of the clamping mechanism 304 detected by the load cell 23 (more strictly, the change of voltage applied on the strain gage) into a format that the radio transmitter 24 can transmit, and the like.

The casing 27 prevents cutting fluid used in the processing equipment 300 from touching the radio transmitter 24, the battery 25 and the electronic circuit 26. The casing 27 in this embodiment is a resin member formed to be a substantial cylinder that one of ends thereof is opened and the other end is closed. The opened end is provided thereon with an O-ring and is screwed to the load cell 23 (a casing of the load cell 23).
As material of the casing 27 in this embodiment, predetermined resin is selected which has resistance to the cutting fluid and does not screen transmission wave of the radio transmitter 24.

The outline of the measuring device 2, especially the part of the measuring device 2 except the main shaft held part 21 and the conveying support part 22 having substantially the same shape as the held part 402 and the support part for conveying 403 of the tool 400 satisfies interference conditions between the tool 400 and the processing equipment 300.
"The interference conditions between the tool 400 and the processing equipment 300" in the application means constraint conditions of the shape (especially, the outline) of the tool preventing the tool from touching the members constituting the processing equipment or an object in the processes of a series of actions that the tool is extract from the tool housing means with the tool conveying means, conveyed and held by the tool holding means of the main shaft and a series of actions that the tool held by the tool holding means is conveyed by the tool conveying means and housed in the tool housing means.

With regard to the measuring device 2 in this embodiment, axial length L of the measuring device 2 (see Fig. 6) is shorter than axial length of one of the tools 400 of the processing equipment 300 having the longest axial length. A diameter R of the measuring device 2 when viewed from the axial direction (see Fig. 6) is shorter than that of one of the tools 400 of the processing equipment 300 having the longest diameter when viewed from the axial direction.
By determining the outline of the measuring device 2 as mentioned above, the ATC 307 and the clamping mechanism 304 can treat the measuring device 2 similarly to the tools 400.

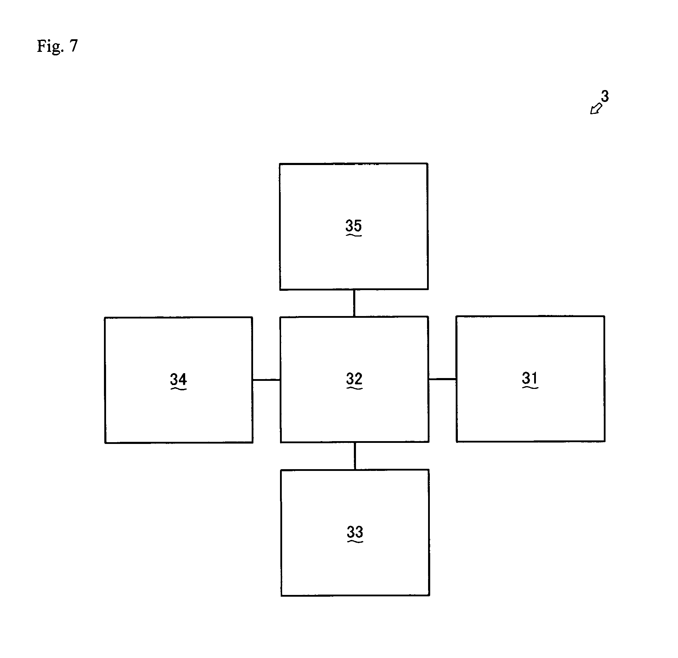

Explanation will be given on the display device 3 which is an embodiment of a display means according to the present invention referring to Figs. 1, 5 and 7.

The display device 3 receives and displays the holding force of the clamping mechanism 304 (more strictly, the information about the holding force of the clamping mechanism 304) transmitted by the measuring device 2 (more strictly, the radio transmitter 24), and mainly comprises a radio receiver 31, a control part 32, an operation part 33, a display part 34, a force supply part 35 and the like.

The radio receiver 31 receives information about the holding force of the clamping mechanism 304 and information about residue of electric power of the battery 25 of the measuring device 2 transmitted by the radio transmitter 24 of the measuring device 2.

The control part 32 is connected to the radio receiver 31 and acquires the information about the holding force of the clamping mechanism 304 received by the radio receiver 31.
The control part 32 comprises a storage means storing a program calculating the holding force of the clamping mechanism 304, an expansion means expanding the program, a computing means performs predetermined computing following the program, a memory means memorizing the result of computing, and the like.
More concretely, the control part 32 may be constructed that a CPU, a ROM, a RAM, a HDD and the like are connected to each other through a bus or the like, or may be constructed by one chip of a LSI or the like.
The storage means of the control part 32 previously stores a data table showing relation between information about the holding force of the clamping mechanism 304 (voltage) and the holding force of the clamping mechanism 304. By comparing the data table with information about the holding force of the clamping mechanism 304 acquired from the radio receiver 31, the holding force of the clamping mechanism 304 is found.
The control part 32 may be exclusive or may alternatively be constructed by a personal computer or a workstation on the market. However, for making the display device 3 portable, the radio receiver 31, the control part 32, the operation part 33, the display part 34 and the force supply part 35 are preferably constructed integrally as shown in Fig. 5.
The storage means of the control part 32 stores data tables showing relation between information about the holding force of the clamping mechanism (voltage) and the holding force of the clamping mechanism about a plurality of holding force measuring devices of different modes (for example, modes different in the shape of the main shaft held part), and one display device 3 can find the holding force of the clamping mechanism detected by each of a plurality of the holding force measuring devices.

The operation part 33 is used by an operator so as to perform various operation of the display device 3, and is connected to the control part 32.
The operation part 33 in this embodiment comprises a switch turning on and off a force source of the display device 3, a switch selecting one of a plurality of data tables stored in the storage means of the control part 32 (data tables showing relation between voltage detected by the load cell and the holding force of the clamping mechanism), and the like.
The operation part 33 in this embodiment comprises a plurality of the switches. However, the operation part may be constructed by a keyboard or a touch panel on the market. By using the touch panel, the operation part 33 can be constructed integrally with the later-discussed display part 34.

The display part 34 displays the holding force of the clamping mechanism 304 found by the control part 32 and is connected to the control part 32. The display part 34 may be exclusive or may alternatively be constructed by a keyboard or a touch panel on the market.
In addition to the holding force of the clamping mechanism 304 found by the control part 32 and is connected to the control part 32, the display part 34 can displays the data table selected actually (data table showing relation between voltage detected by the load cell and the holding force of the clamping mechanism), residue of electric power of the measuring device 2, residue of electric power of the display device 3, and the like.
When the residue of electric power of the measuring device 2, more strictly the residue of the battery 25 of electric power of the measuring device 2 is displayed, whether the measuring device 2 is actuated correctly or not can be grasped easily, thereby improving the workability.

The force supply part 35 supplies electric power to the radio receiver 31, the control part 32, the operation part 33 and the display part 34, and is connected to the control part 32. The force supply part 35 in this embodiment is constructed by a dry battery. However, a secondary battery brings substantially the same effect.

Explanation will be given on a tool holding force measuring method according to the present invention referring to Figs. 1, 2 and 9.

The tool holding force measuring method in this embodiment measures the holding force of the clamping mechanism 304 of the processing equipment 300 by the tool holding force measuring system 1.

The tool holding force measuring method in this embodiment mainly comprises a conveying step 1000, a holding step 2000, a holding force measuring step 3000, a releasing step 4000, a housing step 5000, and the like.

The conveying step 1000 is an embodiment of a conveying step according to the present invention, and in this step, the tool extraction mechanism 330 extracts the measuring device 2 housed previously in the tool rack 320 and the rotary arm 340 conveys the measuring device 2 and holds it at a delivery position 503 to the clamping mechanism 304 provided in the main shaft 303.
"The delivery position 503 to the clamping mechanism 304" in the application means a position at which the clamping mechanism 304 can hold the main shaft held part 21 of the measuring device 2 while the clamping mechanism 304 supports the measuring device 2.

In the conveying step 1000, the tool rack 320 of the ATC 307 moves the tool holding block 322 holding the measuring device 2 to the extraction position 501 along the rail 321a.

Next, the tool extraction mechanism 330 of the ATC 307 moves the tool holding block 322 holding the measuring device 2 to the delivery position 502 to the rotary arm 340.

Subsequently, the rotary arm 340 rotates along the perimeter of the slide rotary shaft 342 so as to engage the notch 341a of the arm member 341 with the groove 22a of the conveying support part 22 of the measuring device 2, and the projections 341b of the arm member 341 is projected so as to support the measuring device 2.

Then, the tool holding block 322 holding the measuring device 2 release the measuring device 2.

Subsequently, while supporting the measuring device 2, the rotary arm 340 is slid oppositely to the tool holding block 322 extracted by the tool extraction mechanism 330 on the axial direction of the slide rotary shaft 342, is rotated along the perimeter of the slide rotary shaft 342, and is slid toward the clamping mechanism 304 of the main shaft 303 on the axial direction of the slide rotary shaft 342, whereby the measuring device 2 is conveyed to the delivery position 503 to the clamping mechanism 304 and kept at the delivery position 503.
When the conveying step 1000 is finished, the process is shifted to the holding step 2000.

The holding step 2000 is an embodiment of a holding step according to the present invention, and in this step, the clamping mechanism 304 holds the main shaft held part 21 of the measuring device 2 kept at the delivery position 503, and then the rotary arm 340 releases the support of the conveying support part 22 of the measuring device 2.

In the holding step 2000, the clamping mechanism 304 holds the main shaft held part 21 of the measuring device 2 kept at the delivery position 503.

Next, the projections 341b is taken into the arm member 341 and the rotary arm 340 is rotated along the perimeter of the slide rotary shaft 342 so as to be moved to a position separated from the measuring device 2, thereby releasing the support of the conveying support part 22 of the measuring device 2.
When the holding step 2000 is finished, the process is shifted to the holding force measuring step 3000.

The holding force measuring step 3000 is an embodiment of a holding force measuring step according to the present invention, and in this step, the measuring device 2 calculates and outputs (transmits on radio) the holding force of the clamping mechanism 304 at the time of holding the main shaft held part 21 of the measuring device 2, and the display device 3 displays the holding force calculated by the measuring device 2 (receives and displays the holding force transmitted by the measuring device 2 on radio).
When the holding force measuring step 3000 is finished, the process is shifted to the releasing step 4000.

The releasing step 4000 is an embodiment of a releasing step according to the present invention, and in this step, the rotary arm 340 supports the conveying support part 22 of the measuring device 2 held by the clamping mechanism 304, and then the clamping mechanism 304 releases holding of the main shaft held part 21 of the measuring device 2.

In the releasing step 4000, the rotary arm 340 is rotated from the position separated from the measuring device 2 along the perimeter of the slide rotary shaft 342 so as to engage the notch 341 a of the arm member 341 with the groove 22a of the conveying support part 22 of the measuring device 2, and then the projections 341b of the arm member 341 is projected so as to support the conveying support part 22 of the measuring device 2 held by the rotary arm 340.

Next, the clamping mechanism 304 releases holding of the main shaft held part 21 of the measuring device 2.
When the releasing step 4000 is finished, the process is shifted to the housing step 5000.

The housing step 5000 is an embodiment of a housing step according to the present invention, and in this step, the rotary arm 340 conveys the measuring device 2 and houses it in the tool rack 320.

In the housing step 5000, while supporting the measuring device 2, the rotary arm 340 is slid along the axis of the slide rotary shaft 342 so as to move the measuring device 2 oppositely to the clamping mechanism 304 and is rotated along the perimeter of the slide rotary shaft 342, and then is slid along the axis of the slide rotary shaft 342 toward the tool holding block 322 extracted by the tool extraction mechanism 330, whereby the measuring device 2 is moved to the delivery position 502 to the tool extraction mechanism 330 and is kept at the delivery position 502.

Next, the tool holding block 322 extracted by the tool extraction mechanism 330 holds the main shaft held part 21 of the measuring device 2 kept at the delivery position 502.

Subsequently, the tool extraction mechanism 330 moves the tool holding block 322 holding the main shaft held part 21 of the measuring device 2 to the extraction position 501 of the tool rack 320 and houses the measuring device 2 in the tool rack 320.

Based on the measuring result of the holding force obtained by the tool holding force measuring system 1, an operator judges whether maintenance of the clamping mechanism 304 of the processing equipment 300 (exchange of the conical spring 314 and the like) is performed or not. For example, when the measuring result of the holding force obtained by the tool holding force measuring system 1 is lower than a predetermined holding force, the holding force is judged to be not enough and the maintenance of the clamping mechanism 304 is performed. When the measuring result is higher than the predetermined holding force, the holding force is judged to be enough and the processing equipment 300 is used continuously without performing the maintenance of the clamping mechanism 304.
In addition, it may alternatively be constructed that a program concerning the judge whether performing the maintenance or not is installed into the display device 3 so that the display device 3 performs the judge.

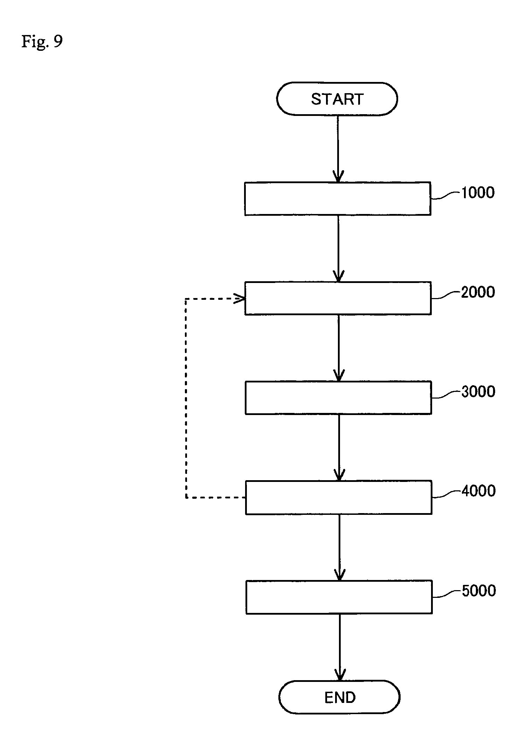

With regard to the tool holding force measuring method in this embodiment, the conveying step 1000, the holding step 2000, the holding force measuring step 3000, the releasing step 4000 and the housing step 5000 are performed in this order. However, it may alternatively be constructed that when the releasing step 4000 is finished, the process is shifted to the holding step 2000 and then the holding force measuring step 3000 and the releasing step 4000 are performed, that is, a series of the holding step 2000, the holding force measuring step 3000 and the releasing step 4000 is repeated several times (see an arrow of a dotted line in Fig. 9).
Accordingly, even if the clamping mechanism 304 does not hold the main shaft held part 21 of the measuring device 2 correctly, the incorrect holding can be grasped easily and the measuring in consideration of dispersion of the measured results can be performed (for example, the average of a plurality of the measured results can be adopted), thereby improving reliability of the measured result of the holding force of the clamping mechanism 304.
The tool holding force measuring method in this embodiment can be performed manually by operating the operating panel 308 of the processing equipment 300 suitably. However, a program concerning the tool holding force measuring method may be installed into the control unit of the processing equipment 300 so as to perform the method automatically.

Accordingly, the tool holding force measuring system 1, which is an embodiment of a tool holding force measuring system according to the present invention, measures the holding force of the clamping mechanism 304 of the processing equipment 300 comprising:
the tool rack 320 housing therein a plurality of the tools 400 each of which having the held part 402 of the substantial same shape;
the clamping mechanism 304 provided in the main shaft 303 rotatably driven by the motor 301 and taking in the tool 400 along the axis of the main shaft 303 while holding the held part 402 so as to hold the tool 400; and
the tool extraction mechanism 330 and the rotary arm 340 extracting selectively one of the tools 400 housed in the tool rack 320, conveying the extracted tool 400 to the position at which the held part 402 of the tool 400 can be held by the clamping mechanism 304, receiving the tool 400 held by the clamping mechanism 304, and conveying the tool 400 to the tool rack 320,
wherein the tool holding force measuring system 1 comprises:
the main shaft held part 21 having substantially the same shape as the held part 402 of the tool 400;
the slide member 28 displaced by taking the main shaft held part 21 in the clamping mechanism 304;
the load cell 23 detecting the displacement amount of the slide member 28 so as to calculate the holding force of the clamping mechanism 304 based on the displacement amount; and
the radio transmitter 24 outputting the holding force calculated by the load cell 23 by transmitting it on radio.

The construction brings the following effects.
Firstly, the measuring device 2 can be treated by the ATC 307 (the tool rack 320, the tool extraction mechanism 330 and the rotary arm 340) similarly to the tools 400 used in the processing equipment 300 so that an operator can make the clamping mechanism 304 hold the measuring device 2 outside the processing equipment 300. The measuring device 2 is independent from the display device 3 and the holding force (the measured result of the holding force) is transmitted on radio from the measuring device 2 to the display device 3 so that an operator can know the measured result of the holding force outside the processing equipment 300 by arranging the display device 3 outside the processing equipment 300.
Therefore, the tool holding force measuring system 1 enables one operator to measure the holding force of the clamping mechanism 304.
Secondly, the tool holding force measuring system 1 makes one operator enable to measure the holding force of the clamping mechanism 304 so that the measuring work of the holding force of the clamping mechanism 304 conventionally performed by at least two operators is made laborsaving.
Thirdly, the tool holding force measuring system 1 makes one operator enable to measure the holding force of the clamping mechanism 304 so that the time required for the measuring work of the holding force conventionally performed by at least two operators is shorten, whereby the operation time of the processing equipment 300 is extended so as to improve the productivity. The time required for measuring the holding force is shortened so that the holding force of the clamping mechanism 304 can be measured with higher frequency, whereby the holding force of the clamping mechanism 304 is prevented from decreasing so as to maintain the processing accuracy of the processing equipment 300 and to prevent the tool 400 from falling from the main shaft 303.

The tool holding force measuring system 1 comprises:
the measuring device 2 having the main shaft held part 21, the slide member 28, the load cell 23 and the radio transmitter 24; and
the display device 3 independent from the measuring device 2 and receives the holding force transmitted from the radio transmitter 24.

Accordingly, an operator outside the processing equipment 300 can know the measured result of the holding force of the clamping mechanism 304.

The embodiment of the tool holding force measuring method according to the present invention measures the holding force of the clamping mechanism 304 included in the processing equipment 300 by using the tool holding force measuring system 1,
wherein the processing equipment 300 comprises:
the tool rack 320 housing therein a plurality of the tools 400 each of which having the held part 402 of the substantial same shape;
the clamping mechanism 304 provided in the main shaft 303 rotatably driven by the motor 301 and taking in the tool 400 along the axis of the main shaft 303 while holding the held part 402 so as to hold the tool 400; and
the tool extraction mechanism 330 and the rotary arm 340 extracting selectively one of the tools 400 housed in the tool rack 320, conveying the extracted tool 400 to the position at which the held part 402 of the tool 400 can be held by the clamping mechanism 304, receiving the tool 400 held by the clamping mechanism 304, and conveying the tool 400 to the tool rack 320,
wherein the tool holding force measuring system 1 comprises:
the main shaft held part 21 having substantially the same shape as the held part 402 of the tool 400;
the slide member 28 displaced by taking the main shaft held part 21 in the clamping mechanism 304;
the load cell 23 detecting the displacement amount of the slide member 28 so as to calculate the holding force of the clamping mechanism 304 based on the displacement amount; and
the radio transmitter 24 outputting the holding force calculated by the load cell 23 by transmitting it on radio,
wherein the tool holding force measuring method comprises:
the conveying step 1000 that the tool extraction mechanism 330 extracts selectively one of the tools 400 housed previously in the tool rack 320 and the rotary arm 340 conveys the extracted tool 400 to the position at which the held part 402 of the tool 400 can be held by the clamping mechanism 304;
the holding step 2000 that the clamping mechanism 304 holds the main shaft held part 21 of the tool holding force measuring system 1 (more strictly, the measuring device 2) and then the rotary arm 340 releases the support of the tool holding force measuring system 1 (more strictly, the measuring device 2)
the holding force measuring step 3000 that the tool holding force measuring system 1 (more strictly, the measuring device 2) calculates and outputs the holding force of the clamping mechanism 304 at the time of holding the main shaft held part 21;
the releasing step 4000 that the rotary arm 340 supports the tool holding force measuring system 1 (more strictly, the measuring device 2) held by the clamping mechanism 304 and then the clamping mechanism 304 releases holding of the main shaft held part 21 of the tool holding force measuring system 1 (more strictly, the measuring device 2); and
the housing step 5000 that that the rotary arm 340 conveys the tool holding force measuring system 1 (more strictly, the measuring device 2) and houses it in the tool rack 320.

The construction brings the following effects.
Firstly, the measuring device 2 can be treated by the ATC 307 (the tool rack 320, the tool extraction mechanism 330 and the rotary arm 340) similarly to the tools 400 used in the processing equipment 300 so that an operator can make the clamping mechanism 304 hold the measuring device 2 outside the processing equipment 300. The measuring device 2 is independent from the display device 3 and the holding force (the measured result of the holding force) is transmitted on radio from the measuring device 2 to the display device 3 so that an operator can know the measured result of the holding force outside the processing equipment 300 by arranging the display device 3 outside the processing equipment 300.
Therefore, the tool holding force measuring system 1 enables one operator to measure the holding force of the clamping mechanism 304.
Secondly, the tool holding force measuring system 1 makes one operator enable to measure the holding force of the clamping mechanism 304 so that the measuring work of the holding force of the clamping mechanism 304 conventionally performed by at least two operators is made laborsaving.
Thirdly, the tool holding force measuring system 1 makes one operator enable to measure the holding force of the clamping mechanism 304 so that the time required for the measuring work of the holding force conventionally performed by at least two operators is shorten, whereby the operation time of the processing equipment 300 is extended so as to improve the productivity. The time required for measuring the holding force is shortened so that the holding force of the clamping mechanism 304 can be measured with higher frequency, whereby the holding force of the clamping mechanism 304 is prevented from decreasing so as to maintain the processing accuracy of the processing equipment 300 and to prevent the tool 400 from falling from the main shaft 303.

With regard to the embodiment of the tool holding force measuring method according to the present invention, a series of the holding step 2000, the holding force measuring step 3000 and the releasing step 4000 is repeated several times.

Accordingly, reliability of the measured result of the holding force of the clamping mechanism 304 is improved.

With regard to the embodiment of the tool holding force measuring method according to the present invention, the tool holding force measuring system 1 comprises:
the measuring device 2 having the main shaft held part 21, the slide member 28, the load cell 23 and the radio transmitter 24; and
the display device 3 independent from the measuring device 2 and receives the holding force transmitted from the radio transmitter 24.

Accordingly, an operator can know the measured result of the holding force of the clamping mechanism 304 outside the processing equipment 300.

### Industrial Applicability

The present invention is applicable in the field of a processing equipment such as a machining centre.

## Claims

1. A tool holding force measuring system measuring holding force of a tool holding means of a processing equipment, wherein the processing equipment comprises:
a tool housing means housing therein a plurality of tools each of which having a held part of substantial same shape;
the tool holding means provided in a main shaft rotatably driven by a drive source and taking in the tool along the axis of the main shaft while holding the held part of the tool so as to hold the tool; and
a tool conveying means extracting selectively one of the tools housed in the tool housing means, conveying the extracted tool to a position at which the held part of the tool can be held by the tool holding means, receiving the tool held by the tool holding means, and conveying the tool to the tool housing means,
**characterized in that** the tool holding force measuring system comprises:
a main shaft held part having substantially same shape as the held part of the tool;
a displacement part displaced by taking the main shaft held part in the tool holding means;
a holding force calculation part detecting the displacement amount of the displacement part so as to calculate holding force of the tool holding means based on the displacement amount; and
an output part outputting the holding force calculated by the holding force calculation part.

2. The tool holding force measuring system as set forth in claim 1, further comprising:
a measuring device having the main shaft held part, the displacement part, the holding force calculation part and the output part; and
a display device independent from the measuring device and receives the holding force transmitted from the output part.

3. A tool holding force measuring method measuring holding force of a tool holding means of a processing equipment by a tool holding force measuring system, wherein the processing equipment comprises:
a tool housing means housing therein a plurality of tools each of which having a held part of substantial same shape;
the tool holding means provided in a main shaft rotatably driven by a drive source and taking in the tool along the axis of the main shaft while holding the held part of the tool so as to hold the tool; and
a tool conveying means extracting selectively one of the tools housed in the tool housing means, conveying the extracted tool to a position at which the held part of the tool can be held by the tool holding means, receiving the tool held by the tool holding means, and conveying the tool to the tool housing means,
wherein the tool holding force measuring system comprises:
a main shaft held part having substantially same shape as the held part of the tool;
a displacement part displaced by taking the main shaft held part in the tool holding means;
a holding force calculation part detecting the displacement amount of the displacement part so as to calculate holding force of the tool holding means based on the displacement amount; and
an output part outputting the holding force calculated by the holding force calculation part,
**characterized in that** the tool holding force measuring method comprises:
a conveying step that the tool conveying means extracts selectively one of the tools housed previously in the tool housing means and conveys the extracted tool to a position at which the held part of the tool can be held by the tool holding means;
a holding step that the tool holding means holds the main shaft held part of the tool holding force measuring system and then the tool conveying means releases the support of the tool holding force measuring system;
a holding force measuring step that the tool holding force measuring system calculates and outputs holding force of the tool holding means at a time of holding the main shaft held part;
a releasing step that the tool conveying means supports the tool holding force measuring system held by the tool holding means and then the tool holding means releases holding of the main shaft held part of the tool holding force measuring system; and
a housing step that that the tool conveying means conveys the tool holding force measuring system and houses it in the tool housing means.

4. The tool holding force measuring method as set forth in claim 3, wherein a series of the holding step, the holding force measuring step and the releasing step is repeated several times.

5. The tool holding force measuring method as set forth in claim 3 or 4, wherein the tool holding force measuring system comprises:
a measuring device having the main shaft held part, the displacement part, the holding force calculation part and the output part; and
a display device independent from the measuring device and receives the holding force transmitted from the output part.
